# EUROPEAN PATENT SPECIFICATION

(11) **EP 3 346 518 B1**
(45) Date of publication and mention of the grant of the patent: **24.07.2019**
(21) Application number: 17150496.2
(22) Date of filing: 06.01.2017
(51) Int. Cl.: H01M 2/10

(54) **HOUSING FOR A BATTERY MODULE INCLUDING A HOUSING GASKET**
GEHÄUSE FÜR EIN BATTERIEMODUL MIT EINER GEHÄUSEDICHTUNG
BOÎTIER POUR UN MODULE DE BATTERIE COMPRENANT UN JOINT DE BOÎTIER

(43) Date of publication of application: 11.07.2018
(73) Proprietor: Samsung SDI Co., Ltd., Yongin-si, Gyeonggi-do 17084 (KR)
(72) Inventor: POSCHARNIG, Guido, 8046 Stattegg (AT); ZAVCAR, Gernot, 8042 Graz (AT); STEINER, Gerhard, 8075 Hart bei Graz (AT)
(74) Representative: Gulde & Partner

(56) References cited:
- EP-A1- 2 385 274
- EP-A1- 2 595 216
- US-A1- 2012 114 999
- US-A1- 2012 164 500
- Anonymous: "ISO 3601 Metric Size O-Rings Quick Reference Chart", , 18 September 2015 (2015-09-18), XP055354012, Retrieved from the Internet: URL:http://www.applerubber.com/src/pdf/iso -3601-metric-size-o-rings.pdf [retrieved on 2017-03-13]

## Description

### Field of the Invention

The present invention relates to a housing for a battery module comprising a specific design of housing gasket.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Generally, large scaled battery systems for example for use in electric vehicles include 3 to 1.000 single cell units. These cells are mostly assembled in battery modules of 10 to 20 cells placed in a common housing. Battery modules can be constructed either in block design or in modular design. In block designs each battery is coupled to a common current collector structure and a common battery management system and the unit thereof is housed. In modular designs, pluralities of battery cells are connected to form submodules and several submodules are connected to form the module. The battery management functions can then be at least partially realized on either module or submodule level and thus interchangeability might be improved. One or more battery modules are mechanically and electrically integrated, equipped with a thermal management system and set up for communication with one or more electrical consumers in order to form a battery system.

Substantially, the battery system includes three main sealing areas: the housing gasket, gaskets for electronic compounds, for example for connectors, as well as gaskets for the cooling system, for example coupling elements. The present invention solely refers to the field of housing gaskets.

Housing gaskets need to ensure safe protection of the interior space of the housing against splatter of liquids or dust over the complete lifetime of the battery system and also to protect ambient from high voltage. For automotive applications, the battery should restrain for example an external water pressure of about 10.000 Pa for at least 30 minutes and must be dust-tight. Furthermore, the housing gasket must resist oil contamination or in case of battery cell leakage electrolyte contact. It should further be possible to reopen the housing gasket such that simple defects, like loose contacts of leaky cooling pipes, may be rectified. In addition, the design of housing gaskets should consider parameters like the material and the surface structure of the housing. Finally, serial production requires optimization of the manufacturing process respectively gasket housing. For example, the housing may include assembling aid elements for speed up the fastening.

The state of the art includes rigid battery housings consisting of three parts, namely a base plate, a housing frame and a cover plate. Basically, there are currently two common solutions according to which either a (foamed) gasket is dispensed in a groove or on a plane surface between the parts of the housing. The counterpart bearing the gasket has a flat surface in order to avoid any damage of the gasket. Due to space limitations, the gasket is usually provided on the housing frame. As a consequence, the housing frame has a gasket at the bottom and the top flange which requires very specific and expensive workpiece carrier in the assembly line for avoiding any damages of the foamed gasket. Thus, the housing frame cannot be transported by using the bottom or top flange. Further, only a small tolerance for the assembly of the gasket is acceptable in common gaskets, which increases the rate of defective goods. Besides that, it is expensive to machine a groove due to reduced feed rates at the machining process.

Document EP 2 595 216 A1 discloses a battery module comprising a housing including a base plate, a cover plate, and a housing frame, with a gasket included within a recess of the upper (or lower) flange of the housing frame and interposed between the cover (or the base) plate and the housing frame.

Document US 2012/114999 A1 discloses a battery module comprising a plurality of rechargeable batteries and a housing formed by a base plate, a housing frame, and a cover plate, wherein a flange of the wall body facing the cover plate includes a recess where a gasket is arranged.

It is thus an object of the present invention to overcome or reduce at least some of the drawbacks of the prior art and to provide a housing for a battery module that may be established by a simple manufacturing process using non-expensive elements.

### Summary of Invention

One or more of the drawbacks of the prior art could be avoided or at least reduced by means of the present invention. In particular, a battery module is provided comprising:
- two or more battery cells;
- a housing including a base plate, a housing frame and a cover plate; and
- a gasket interposed between the base plate and the housing frame, respectively the cover plate and the housing frame.

The battery module is characterized in that an upper flange of the housing frame facing the cover plate and/or a lower flange of the housing frame facing the base plate has a stepped contour including a recess at an inner side of the housing frame, wherein the gasket is arranged within the recess, and wherein the gasket is adhered to the base plate and/or the cover plate.

Thus, one aspect of the present invention is to provide a battery module, wherein the upper and/or lower edge of the housing frame is modified in that a recess (or gasket rim) is in communication with an interior space of the housing frame. In the sealed housing, the sealing gasket lies within said recess. Specifically, the gasket is interposed between a sealing flange, i.e. a bottom surface of the recess, and the base plate, respectively cover plate. The inventive gasket arrangement ensures sufficient sealing of the housing against leakage of liquids form the interior to the outside (e.g. electrolyte or cooling medium in case of leakage) or vice versa from the outside into the battery module interior (e.g. water or oil). In addition, the inventive gasket arrangement may ensure electromagnetic compatibility protection, in particular electromagnetic interference protection (EMC/EMI protection). Furthermore, the recess may be formed with higher feed rates at the machining process compare to for example a groove.

According to the invention, the gasket is adhered to the base plate and/or the cover plate. Thus, the gasket may include an adhesive layer or may itself be made of a material which at least temporarily has adhesive properties. When the gasket is applied on the base plate, respectively cover plate, damages of the gasket during assembly of the battery module may be eliminated since the base plate and the cover plate will be assembled as one of the last steps of the manufacturing process of the battery module. Thus, conventional jigs, which ensure the gasket to be undamaged during assembly, may be avoided and thus the manufacturing process is less cost intensive.

For example, the gasket may be a foamed gasket and foam forming the gasket may be directly applied on the base plate, respectively cover plate. While conventional gaskets are cut from a sheet to form a seal between surfaces, form-in-place foam gaskets (FIPFG) are dispensed as a paste directly onto one of the surfaces. This sealing process can greatly reduce costs and lead times. The FIPFG process is normally used for the application of liquid foam. The thixotropic properties of the foam ensure that complicated tridimensional sealing shapes and excursive cross-sectional variations can be applied to the part by using for example adequate robot technology. The foam may comprise for example polyurethane.

According to another embodiment of the present invention, a width of the recess is in the range of 1:5 to 1:2 of a total width of the upper flange, respectively lower flange. Keeping the dimension of recess within the mentioned range ensure mechanically integrity of the housing frame. If the ratio is above 1:2, the flange may lack sufficient mechanical integrity. If the ratio is below 1:5, the flange may be too small for correct placing of the gasket. A total width of the upper flange is defined to be a distance from the inner side of the housing frame towards the outer side of the housing frame. The upper frame represents the small side of the housing which directly faces and/or touches an inner side surface of the cover plate.

Independent from the aforegoing embodiment, but preferably in combination thereof, the width of the recess is in the range of 3:1 to 1.2:1 of a width of the gasket. Thus, successful arrangement of the different parts of the housings may be achieved within a broader tolerance compared to for example gaskets using a groove. As a consequence, the rate of defective goods is decreased. If the ratio is above 3:1, the manufacturing cost for providing the recess may increase without having any further improvement with respect to the sealing function of the gasket. If the ratio is below 1.2:1, a disarrangement of gasket and recess may occur in the industrial process causing increased wastage.

According to a further embodiment, which is preferably combined with one or both of the two before mentioned embodiments, a depth of the recess is in the range of 1:1.1 to 1:2 of a height of the gasket. In other words, the height of the gasket is slightly larger than a depth of the recess. Since gaskets for present intended purpose are commonly made of an elastic material, the provision ensures safe sealing even within a broader tolerance of both components. Again, the rate of defective products is lowered. If the ratio is below 1:1.1, the gasket may not sufficiently seal the housing. If the ratio is above 1:2, a correct closure of the housing may be inhibited.

According to another preferred embodiment, the recess includes a flange surface substantially extending perpendicular to an inner side surface of the housing frame and a circumferential bulge is provided on the flange surface of the recess. Preferably, the gasket is placed (centrally) on top of the circumferential bulge. The circumferential bulge may have a height h2 and the recess may have a height h3. A ratio of the height h3 to the height h2 may be in the range of 2 : 1 to 5 : 1. Thereby, the total sealing surface of the gasket may be significantly increased. If the ratio is above 5:1, the sealing face increase is insignificant. If the ratio is below 2:1, a correct closure of the housing may be inhibited.

According to another aspect of the present invention, a vehicle including a battery module as defined above is provided. The vehicle may be an automobile.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a perspective view of a battery module.
- FIG. 2: is a partially cut-away cross-sectional view of a housing for a battery module according to the present invention.
- FIG. 3: is a perspective and explosion view on a housing according to another embodiment of the present invention.
- FIG. 4: is an enlarged partially cut-away cross-sectional view on the housing illustrated in FIG. 3.
- FIG. 5: is a partially cut-away cross-sectional view on a housing according to another exemplary embodiment of the invention.
- FIG. 6: is an enlarged view on a part of the embodiment of FIG. 5.
- FIG. 7: is a perspective view on a part of the upper flange of the housing frame according to the embodiment of FIG. 5.

### Detailed Description of the Invention

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, as defined in the set of appended claims, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

As used herein, the term "and/or" includes any and all combinations of one or more of the associated listed items. Further, the use of "may" when describing embodiments of the present invention refers to "one or more embodiments of the present invention."

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

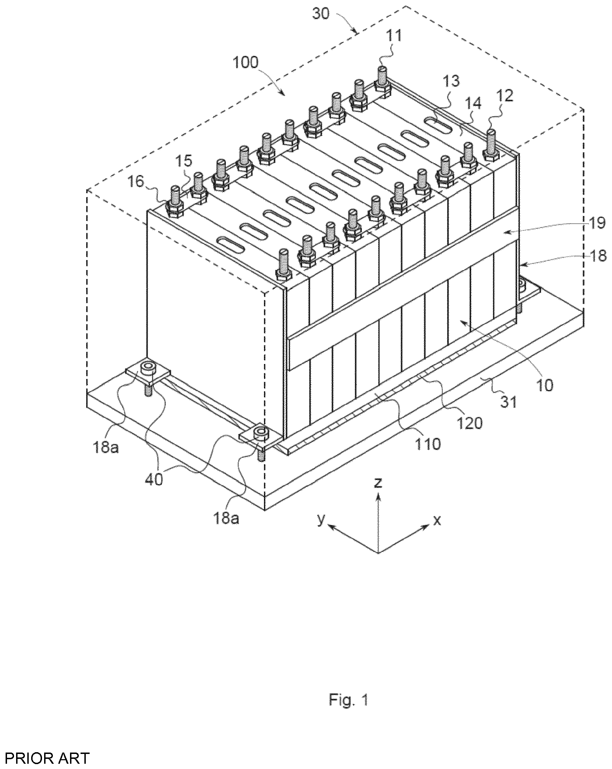

Referring to FIG. 1, an exemplary embodiment of a conventional battery module 100 includes a plurality of battery cells 10 aligned in one direction and a heat exchange member 110 provided adjacent to a bottom surface of the plurality of battery cells 10. A pair of end plates 18 are provided to face wide surfaces of the battery cells 10 at the outside of the battery cells 10, and a connection plate 19 is configured to connect the pair of end plates 18 to each other thereby fixing the plurality of battery cells 10 together. Fastening portions 18a on both sides of the battery module 100 are fastened to a base plate 31 by bolts 40. The base plate 31 is part of a housing 30. The further parts of the housing, i.e. a cover plate and a housing frame, are not shown in FIG. 1. An elastic member 120 made of rubber or other elastic materials may be interposed between the base plate 31 and the heat exchange member 110.

Here, each battery cell 10 is a prismatic (or rectangular) cell, the wide flat surfaces of the cells being stacked together to form the battery module. Further, each battery cell 10 includes a battery case configured for accommodation of an electrode assembly and an electrolyte. The battery case is hermetically sealed by a cap assembly 14. The cap assembly 14 is provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighboring battery cells 10 are electrically connected through a bus bar 15, and the bus bar 15 may be fixed by a nut 16 or the like. Hence, the battery module 100 may be used as power source unit by electrically connecting the plurality of battery cells 10 as one bundle. Rechargeable secondary batteries may be used as the battery cells 10, especially lithium secondary batteries. The battery module 100 may be a 48V battery for automotive application.

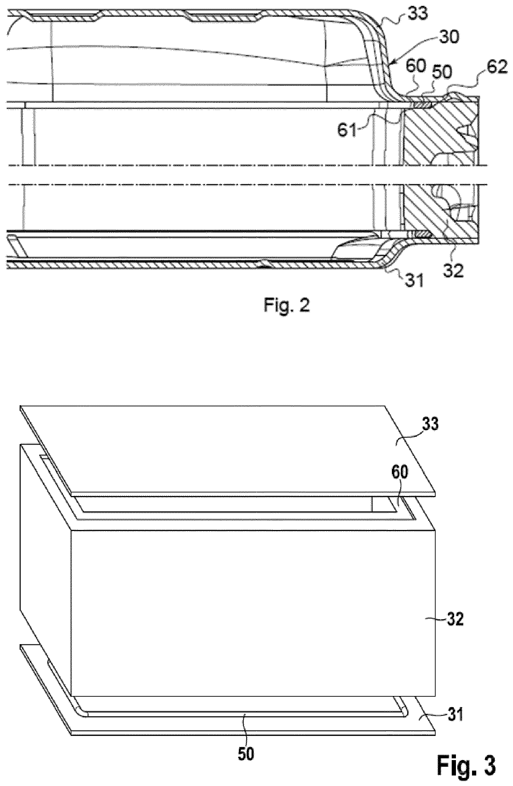

FIG. 2 is a partially cut-away cross-sectional view of the housing 30 according to an exemplary embodiment of the invention. The housing 30 includes the base plate 31, a housing frame 32, and a cover plate 33. Each part of the housing 30 may be made of a rigid material, for example a metal like stainless steel or aluminum. The housing frame 32 includes an upper flange facing an inner side surface of the cover plate 33 as well as a lower flange facing an inner side surface of the base plate 31.

A gasket 50 is interposed between the housing frame 32 and the cover plate 33, respectively between the housing frame 32 and the base plate 31 and is adhered to the base plate and/or the cover plate. In particular, the gasket 50 is placed in a recess 60 extending from and in communication with an inner side surface of the housing frame 32. The recess 60 according to the embodiment includes a flange surface 61 and an end surface 62. The gasket 50 is arranged closed to the end surface 62 of the recess 60, but the arrangement is not limited thereto. Here, the flange surface 61 substantially extends perpendicular to the inner side surface of the housing frame 32, whereas the end surface 62 substantially has the same orientation as the inner side surface of the housing frame 32. However, flange surface 61 and end surface 62 need not necessarily show such orientation. The recess 60 may be easily formed with high speed rates in a separate machining process.

The gasket 50 may be formed by an elastic material, preferably elastomer like for example polyolefin Ethylene-Propylene-Dien-Monomers (EPDM). According to one embodiment, the gasket 50 is a foam gasket. The gasket 50 may be adhered to the inner side surface of the base plate 31, respectively cover plate 33. Therefore, the gasket 50 may have at least temporally adhesive characteristics or an additional adhesive film is provided between the gasket 50 and the base plate 31 and cover plate 33, respectively (not shown). For example, the gasket 50 may be a tape including an adhesive surface and the tape will be adhered to the base plate 31 and cover plate 33 during the manufacturing process prior to finalizing the housing.

According to the embodiment illustrated in FIG. 2, the recess 60 shows a width of about 1/3 of the total width of the upper flange of the housing frame 32. The same applies to the dimension of the recess being arranged at the lower flange of the housing frame 32 facing the base plate 31, but not limited thereto. Furthermore, a ratio of the width of the gasket 50 and the width of the recess 60 is about 1:2 according to the present embodiment of the invention. Since the gasket 50 may be formed of an elastic material, a height of the gasket 50 may be about 1.1 to 2 times of the height of the gasket 50 to ensure tightened sealing of the interior space of the housing 30.

FIG. 3 is a perspective and explosion view of a housing 30 according to another embodiment of the present invention. For purpose of illustration, the cover plate 33 is shown semitransparent. Here, the gaskets 50 adhered to the inner side surfaces of base plate 31 and cover plate 33 have the contour of a circumferential tape. During the manufacturing process the housing frame 32 is placed on the base plate 31 and the cover plate 33 is placed on the housing frame 32.

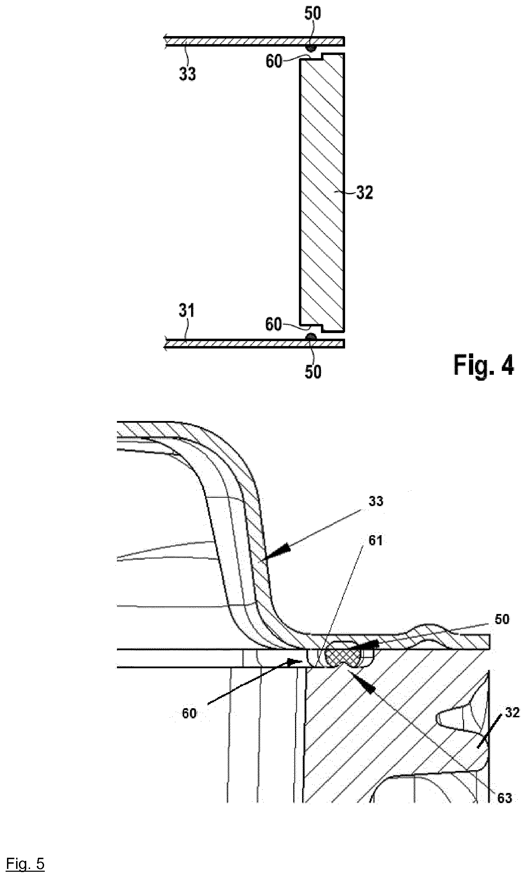

FIG. 4 is an enlarged partially cut-away cross-sectional view on the housing 30 illustrated in FIG. 3. Here, a ratio of the width of each recess 60 to the total width of the upper and lower flange of the housing frame 32 is about 1:2. By assembly of the base plate 31, the housing frame 32 and the cover plate 33, the gasket 50 will lie closed within the recess 60 and ensure sealing of the interior space of the housing 30.

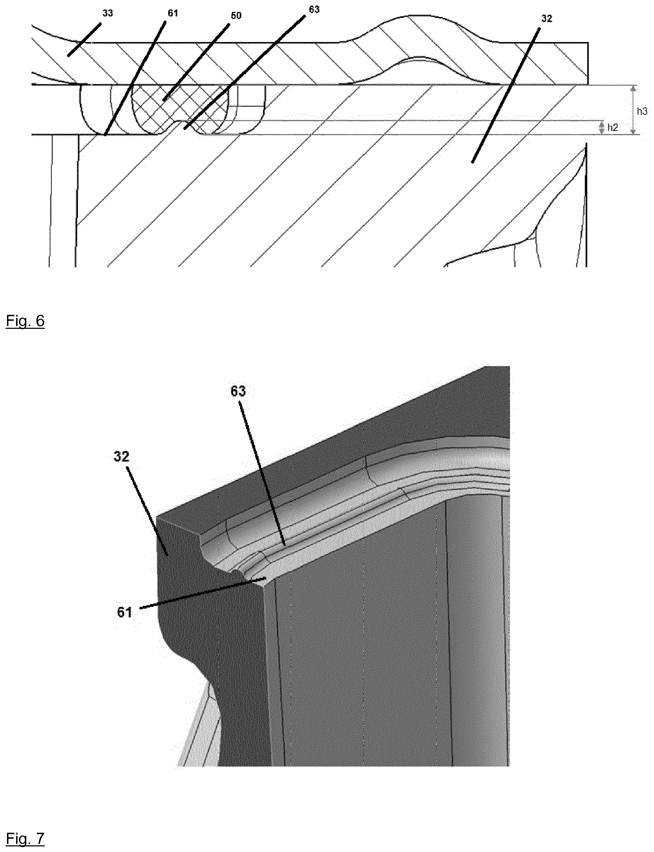

FIG. 5 is a partially cut-away cross-sectional view on another exemplary embodiment of the present invention. FIG. 6 is an enlarged view on a part of the embodiment of FIG. 5 showing the upper flange of the housing frame 32 including the recess 60 and gasket 50. Basically, the embodiment of FIG. 5 complies with the embodiment of FIG.2 except that a circumferential bulge 63 is provided on the flange surface 61 of the recess 60. The gasket 50 is placed centrally on top of the circumferential bulge 63. Thus, the total sealing surface of the gasket 50 may increase up to 20%. The circumferential bulge 63 has a height h2 and the recess 60 has a height h3. A ratio of height h3 to height h2 is preferably in the range of 2 : 1 to 5 : 1. According to the exemplary embodiment said ration is about 3.75 : 1, but not limited thereto.

FIG. 7 shows a perspective view on a part of the upper flange of the housing frame 32 according to the embodiment of FIG. 5. Here, the circumferential bulge 63 is placed at about the mid of the recess 60 on the flange surface 61, but not limited thereto.

## Claims

1. A battery module (100), comprising:
- two or more battery cells (10);
- a housing (30) including a base plate (31), a housing frame (32) and a cover plate (33); and
- a gasket (50) interposed between the base plate (31) and the housing frame (32), respectively the cover plate (33) and the housing frame (32),
**characterized in that** an upper flange of the housing frame (32) facing the cover plate (33) and/or a lower flange of the housing frame (32) facing the base plate (31) has a stepped contour including a recess (60) at an inner side of the housing frame (32), wherein the gasket (50) is arranged within the recess (60), and wherein the gasket (50) is adhered to the base plate (31) and/or the cover plate (33).

2. The battery module of claim 1, wherein the gasket (50) is a foamed gasket.

3. The battery module of one of the preceding claims, wherein a width of the recess (60) is in the range of 1:5 to 1:2 of a total width of the upper flange, respectively lower flange.

4. The battery module of one of the preceding claims, wherein the width of the recess (60) is in the range of 3:1 to 1.2:1 of a width of the gasket (50).

5. The battery module of one of the preceding claims, wherein a depth of the recess (60) is in the range of 1:1.1 to 1:2 of a height of the gasket (50).

6. The battery module of one of the preceding claims, wherein the recess (60) includes a flange surface (61) substantially extending perpendicular to an inner side surface of the housing frame (32) and a circumferential bulge (63) is provided on the flange surface (61) of the recess (60).

7. The battery module of claim 6, wherein the gasket (50) is placed on top of the circumferential bulge (63).

8. The battery module of claims 6 or 7, wherein the circumferential bulge (63) has a height (h2) and the recess (60) has a height (h3) and wherein a ratio of the height (h3) to the height (h2) is in the range of 2:1 to 5:1.

9. A vehicle including a battery module according to one of the preceding claims.

## Patentansprüche

1. Ein Batteriemodul (100), aufweisend:
- zwei oder mehr Batteriezellen (10);
- ein Gehäuse (30), das eine Basisplatte (31), einen Gehäuserahmen (32) und eine Deckplatte (33) aufweist; und
- eine Dichtung (50), die zwischen der Basisplatte (31) und dem Gehäuserahmen (32), beziehungsweise der Deckplatte (33) und dem Gehäuserahmen (32), angeordnet ist,
**dadurch gekennzeichnet, dass** ein oberer Flansch des Gehäuserahmens (32), der der Deckplatte (33) zugewandt ist, und/oder ein unterer Flansch des Gehäuserahmens (32), der der Basisplatte (31) zugewandt ist, eine gestufte Kontur aufweist, die eine Ausnehmung (60) an einer Innenseite des Gehäuserahmens (32) aufweist, wobei die Dichtung (50) in der Ausnehmung (60) angeordnet ist und wobei die Dichtung (50) an der Basisplatte (31) und/oder der Deckplatte (33) angeklebt ist.

2. Das Batteriemodul nach Anspruch 1, wobei die Dichtung (50) eine geschäumte Dichtung ist.

3. Das Batteriemodul nach einem der vorhergehenden Ansprüche, wobei eine Breite der Ausnehmung (60) im Bereich von 1:5 bis 1:2 der Gesamtbreite des oberen Flanschs, beziehungsweise des unteren Flanschs, liegt.

4. Das Batteriemodul nach einem der vorhergehenden Ansprüche, wobei die Breite der Ausnehmung (60) im Bereich von 3:1 bis 1,2:1 einer Breite der Dichtung (50) liegt.

5. Das Batteriemodul nach einem der vorhergehenden Ansprüche, wobei eine Tiefe der Ausnehmung (60) im Bereich von 1:1,1 bis 1:2 einer Höhe der Dichtung (50) liegt.

6. Das Batteriemodul nach einem der vorhergehenden Ansprüche, wobei die Ausnehmung (60) eine Flanschoberfläche (61), die sich im Wesentlichen perpendikulär zu einer Innenfläche des Gehäuserahmens (32) erstreckt, aufweist und ein Umfangswulst (63) auf der Flanschoberfläche (61) der Ausnehmung (60) bereitgestellt wird.

7. Das Batteriemodul nach Anspruch 6, wobei die Dichtung (50) auf dem Umfangswulst (63) positioniert ist.

8. Das Batteriemodul nach Anspruch 6 oder 7, wobei der Umfangswulst (63) eine Höhe (h2) aufweist und die Ausnehmung (60) eine Höhe (h3) aufweist und wobei ein Verhältnis der Höhe (h3) zur Höhe (h2) im Bereich von 2:1 bis 5:1 liegt.

9. Ein Fahrzeug, aufweisend ein Batteriemodul nach einem der vorhergehenden Ansprüche.

## Revendications

1. Module de batterie (100) comprenant :
deux ou plus de deux éléments de batterie (10) ;
un boîtier (30) comprenant une plaque de base (31), un bâti de boîtier (32) et une plaque de couvercle (33) ; et
un joint (50) intercalé entre la plaque de base (31) et le bâti de boîtier (32), respectivement la plaque de couvercle (33) et le bâti de boîtier (32),
**caractérisé en ce qu'**une bride supérieure du bâti de boîtier (32) faisant face à la plaque de couvercle (33) et/ou une bride inférieure du bâti de boîtier (32) faisant face à la plaque de base (31) a un contour étagé comprenant un évidement (60) au niveau d'un côté interne du bâti de boîtier (32), où le joint (50) est agencé à l'intérieur de l'évidement (60), et où le joint (50) est fixé à la plaque de base (31) et/ou la plaque de couvercle (33).

2. Module de batterie selon la revendication 1, dans lequel le joint (50) est un joint en mousse.

3. Module de batterie selon l'une des revendications précédentes, dans lequel une largeur de l'évidement (60) est dans la plage de 1:5 à 1:2 d'une largeur totale de la bride supérieure, respectivement de la bride inférieure.

4. Module de batterie selon l'une des revendications précédentes, dans lequel la largeur de l'évidement (60) est dans la plage de 3:1 à 1,2:1 d'une largeur du joint (50).

5. Module de batterie selon l'une des revendications précédentes, dans lequel une profondeur de l'évidement (60) est dans la plage de 1:1,1 à 1:2 d'une hauteur du joint (50) .

6. Module de batterie selon l'une des revendications précédentes, dans lequel l'évidement (60) comprend une surface de bride (61) s'étendant sensiblement perpendiculairement à une surface latérale interne du bâti de boîtier (32) et un renflement circonférentiel (63) est prévu sur la surface de bride (61) de l'évidement (60).

7. Module de batterie selon la revendication 6, dans lequel le joint (50) est placé sur le dessus du renflement circonférentiel (63).

8. Module de batterie selon les revendications 6 ou 7, dans lequel le renflement circonférentiel (63) a une hauteur (h2) et l'évidement (60) a une hauteur (h3) et dans lequel un rapport de la hauteur (h3) sur la hauteur (h2) est dans la plage de 2:1 à 5:1.

9. Véhicule comprenant un module de batterie selon l'une des revendications précédentes.
